(19) Europäisches Patentamt
European Patent Office
Office européen des brevets

(11) **EP 4 023 594 A1**

(12) **EUROPEAN PATENT APPLICATION**
published in accordance with Art. 153(4) EPC

(43) Date of publication:
**06.07.2022 Bulletin 2022/27**

(21) Application number: **20856234.8**

(22) Date of filing: **26.08.2020**

(51) International Patent Classification (IPC):
*C01B 25/37* (2006.01)    *H01B 1/06* (2006.01)
*H01B 1/08* (2006.01)    *H01M 10/052* (2010.01)
*H01M 10/0562* (2010.01)

(52) Cooperative Patent Classification (CPC):
**C01B 25/37; H01B 1/06; H01B 1/08; H01M 10/052;
H01M 10/0562;** Y02E 60/10

(86) International application number:
**PCT/JP2020/032156**

(87) International publication number:
**WO 2021/039835 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2019 JP 2019158373**

(71) Applicant: **Showa Denko K.K.
Tokyo 105-8518 (JP)**

(72) Inventors:
• **SEI Ryosuke
Tokyo 105-8518 (JP)**
• **LEE Kunchan
Tokyo 105-8518 (JP)**
• **KURAHASHI Shunsuke
Tokyo 105-8518 (JP)**

(74) Representative: **Strehl Schübel-Hopf & Partner
Maximilianstrasse 54
80538 München (DE)**

(54) **LITHIUM-ION-CONDUCTIVE OXIDE**

(57)    An embodiment of the present invention relates to a lithium ion-conducting oxide or a lithium-ion secondary battery. The lithium ion-conducting oxide includes at least lithium, tantalum, phosphorus, M2, and oxygen as constituent elements, wherein M2 is at least one element selected from the group consisting of elements of the Group 14 and Al (provided that carbon is excluded), a ratio of number of atoms of each constituent element of lithium, tantalum, phosphorus, M2, and oxygen is 1 : 2 : 1-y : y : 8, wherein y is more than 0 and less than 0.7, and the lithium ion-conducting oxide contains a monoclinic crystal.

[Figure 3]

EP 4 023 594 A1

**Description**

TECHNICAL FIELD

An embodiment of the present invention relates to a lithium ion-conducting oxide.

BACKGROUND ART

In recent years, the development of high output and high capacity batteries are required for the power sources for laptop computers, tablet devices, mobile phones, smartphones, and electric vehicles (EV). Of these, an all-solid lithium-ion battery using a solid electrolyte in place of a liquid electrolyte such as an organic solvent have been drawing attentions for the excellent charging/discharging efficiency, charging speed, safety, and productivity.

For example, Patent Literature 1 discloses a perovskite ion-conducting oxide having $SrZrO_3$ as a base constituent.

Non Patent Literature 1 describes $LiTa_2PO_8$ having a monoclinic crystal structure.

CITATION LIST

Patent Literature

Patent Literature 1: JP-A-2016-169145

Non Patent Literature

Non Patent Literature 1: J. Kim et al., J. Mater. Chem. A, 2018, 6, p22478-22482

SUMMARY OF INVENTION

Technical Problem

As the lithium-ion conducting solid electrolyte, sulfide solid electrolytes are known; however, from a viewpoint of safety, oxide solid electrolytes are preferable. The ion-conducting oxide disclosed in Patent Literature 1 enhances the ion conductivity at the grain boundaries by having a base composition in which the Sr site or the Zr site are replaced with other elements, but the ion conductivity is not yet sufficient, and are required for high lithium ion conductivity at grain boundaries and the enhancement in the total ion conductivity of the lithium ion conductivities inside the crystal grains and at the grain boundaries. Further, the total lithium ion conductivity of $LiTa_2PO_8$ disclosed in Non Patent Literature 1 is $2.48 \times 10^{-4}$ (S/cm), which is, for example, lower than the perovskite compound disclosed in Patent Literature 1.

The above conventional technologies do not describe or suggest that the lithium ion-conducting oxide having lithium, tantalum, phosphorus, and oxygen as the constituent elements enhances the total ion conductivity of the lithium ion conductivities inside the crystal grains and at the grain boundaries.

Solution to Problem

An embodiment of the present invention includes the following configuration.

[1] A lithium ion-conducting oxide, comprising:

at least lithium, tantalum, phosphorus, M2, and oxygen as constituent elements,
wherein M2 is at least one element selected from the group consisting of elements of the Group 14 and Al (provided that carbon is excluded),
a ratio of number of atoms of each constituent element of lithium, tantalum, phosphorus, M2, and oxygen is 1 : 2 : 1-y : y : 8,
wherein y is more than 0 and less than 0.7, and
the lithium ion-conducting oxide containing a monoclinic crystal.

[2] The lithium ion-conducting oxide according to the item 1, wherein M2 is any one or more elements selected from the group consisting of Si, Ge, and Al.

[3] The lithium ion-conducting oxide according to the item 1 or 2, wherein a total content of the monoclinic crystal is 60% or more.

[4] The lithium ion-conducting oxide according to any one of the items 1 to 3, wherein a lithium ion conductivity in total $\delta_{total}$ (25°C) is $1.50 \times 10^{-4}$ (S/cm) or more.

[5] A lithium-ion secondary battery comprising the lithium ion-conducting oxide according to any one of the items 1 to 4 as a solid electrolyte.

Advantageous Effects of Invention

The lithium ion-conducting oxide in a preferable embodiment of the present invention, when used, for example, as a solid electrolyte for a lithium-ion secondary battery, enables to afford a lithium-ion secondary battery that has high lithium ion conductivity at the grain boundaries and high total ion conductivity of lithium ion conductivities inside the crystal grains and at the grain boundaries.

Brief Description of Drawings

[Figure 1] Figure 1 is an X-ray diffraction pattern of the lithium ion-conducting oxide (1) prepared in Example 1.
[Figure 2] Figure 2 is an X-ray diffraction pattern of the lithium ion-conducting oxide (2) prepared in Example 2.
[Figure 3] Figure 3 is an X-ray diffraction pattern of the lithium ion-conducting oxide (3) prepared in Example 3.
[Figure 4] Figure 4 is an X-ray diffraction pattern of the lithium ion-conducting oxide (4) prepared in Example 4.
[Figure 5] Figure 5 is an X-ray diffraction pattern of the lithium ion-conducting oxide (5) prepared in Example 5. Of the diffraction peaks, the diffraction peaks derived from impurities other than monoclinic crystals equivalent to $LiTa_2PO_8$ are shown in circle marks.
[Figure 6] Figure 6 is an X-ray diffraction pattern of the lithium ion-conducting oxide (6) prepared in Example 6. Of the diffraction peaks, the diffraction peaks derived from impurities other than monoclinic crystals equivalent to $LiTa_2PO_8$ are shown in circle marks and an inverted triangle mark.
[Figure 7] Figure 7 is an X-ray diffraction pattern of the lithium ion-conducting oxide (7) prepared in Example 7. Of the diffraction peaks, the diffraction peaks derived from impurities other than monoclinic crystals equivalent to $LiTa_2PO_8$ are shown in circle marks and inverted triangle marks.
[Figure 8] Figure 8 is an X-ray diffraction pattern of the lithium ion-conducting oxide (8) prepared in Example 8. Of the diffraction peaks, the diffraction peaks derived from impurities other than monoclinic crystals equivalent to $LiTa_2PO_8$ are shown in inverted triangle marks.
[Figure 9] Figure 9 is an X-ray diffraction pattern of the lithium ion-conducting oxide (c1) prepared in Comparative Example 1.
[Figure 10] Figure 10 is an X-ray diffraction pattern of the lithium ion-conducting oxide (c2) prepared in Comparative Example 2. Of the diffraction peaks, the diffraction peaks derived from impurities other than monoclinic crystals equivalent to $LiTa_2PO_8$ are shown in inverted triangle marks and square marks.
[Figure 11] Figure 11 is an example of transmitted image of the lithium ion-conducting oxide (4) prepared in Example 4 obtained using a transmission electron microscope (TEM).

Description of Embodiments

Hereinafter, preferable embodiments of the present invention will be described in detail.

(Crystal system of the lithium ion-conducting oxide)

The lithium ion-conducting oxide in a preferable embodiment of the present invention has a base constituent in which some of P in $LiTa_2PO_8$ is replaced with an element M2, and is confirmed to have a monoclinic crystal system in X-ray diffraction measurement. The $LiTa_2PO_8$, in which a monoclinic crystal system is confirmed, has lattice constants a, b, and c of 9.712 Å, 11.532 Å, and 10.695 Å respectively, the $\beta$ angle of 90.03°, and a theoretical density of 5.85 (g/cm³). These lattice constants and $\beta$ angle can be calculated by carrying out the Rietveld analysis to be described later in an example. In the lithium ion-conducting oxide in a preferable embodiment of the present invention, the element M2 replaces and is doped at the P position, and the lattice constants and the $\beta$ angle fluctuate depending on the element species and doping amount of the element M2, but the monoclinic crystal system is retained. More specifically, the monoclinic crystal can even be an orthorhombic crystal when a $\beta$ angle varies due to a doping amount and approaches nearly 90°.

(Constituent element of the lithium ion-conducting oxide)

The lithium ion-conducting oxide in a preferable embodiment of the present invention comprises at least lithium, tantalum, phosphorus, M2, and oxygen as constituent elements, wherein M2 is at least one element selected from the group consisting of elements of the Group 14 and Al (provided that carbon is excluded), a ratio of number of atoms of each constituent element of lithium, tantalum, phosphorus, M2, and oxygen is 1 : 2 : 1-y : y : 8, wherein y is more than 0 and less than 0.7. The lithium ion-conducting oxide in a preferable embodiment of the present invention can also be called a lithium ion-conducting oxide composed of specific oxides containing lithium. However, this does not strictly exclude the presence of impurities in the lithium ion-conducting oxide, and it is permissible for the lithium ion-conducting oxide in a preferable embodiment of the present invention to include inevitable impurities caused from raw materials and/or from the production process and other impurities having different crystal systems within the range of not deteriorating the lithium ion conductivity.

The ratio of number of atoms of each constituent element of lithium, tantalum, phosphorus, an element M2, and oxygen in the lithium ion-conducting oxide in a preferable embodiment of the present invention can be determined using absolute intensity quantification by auger electron spectroscopy (AES) with, for example, a standard powder sample containing Mn, Co, and Ni in a ratio of 1 : 1 : 1 as a lithium-containing transition metal oxide such as $LiCoO_2$.

(Element M2 content)

The lithium ion-conducting oxide in a preferable embodiment of the present invention can be represented by the following formula (1).

$$LiTa_2P_{1-y}M2_yO_8 \cdots \qquad \text{Formula (1)}$$

The content of element M2 included in the lithium ion-conducting oxide and represented by y in the above formula (1) is more than 0 and less than 0.7. This content range, in terms of percentage of the number of atoms of element M2 relative to the total number of atoms of phosphorus and element M2 elements, is more than 0.0 and less than 70.0. The lower limit of the element M2 content, represented by y in the above formula (1), is preferably 0.01, more preferably 0.02, and further preferably 0.03. The upper limit of the element M2 content is preferably 0.65, more preferably 0.60, and further preferably 0.55. When an element M2 content is in the above range, the total ion conductivity of the lithium ion conductivities inside the crystal grains and at the grain boundaries to be described later is high. The element M2 content can be determined by a conventionally known quantification analysis in terms of percentage of the number of atoms of element M2 relative to the total number of atoms of phosphorus and element M2. For example, the element M2 content can be determined by adding acid to a sample to thermally decompose, then volume-fixing the pyrolysate and using a high frequency inductively coupled plasma (ICP) atomic emission spectroscopy. In the method for producing a lithium ion-conducting oxide to be described later, the percentage of the number of atoms of element M2 relative to the total number of atoms of phosphorus and element M2 can be simply calculated from feeding amounts of raw materials in terms of a doping amount of element M2 since phosphorus and the element M2 do not efflux from the system.

(Element M2)

The element M2 included in the lithium ion-conducting oxide is at least one element selected from the group consisting of elements of the Group 14 and Al (provided that carbon is excluded). The element M2 is preferably any one or more selected from the group consisting of Si, Ge, and Al. The element M2 is more preferably Si and Al, and further preferably Si, since a lithium ion conductivity at the grain boundaries is higher. These elements M2 can be used in combinations of two or more thereof.

With a focus on the valence of the constituent elements of the lithium ion-conducting oxide, the valences of the element M2 to be doped has a different valence from that of phosphorus, and thus the lithium contained in the lithium ion-conducting oxide conceivably increases and decreases to balance the charge neutrality. For example, when an increased and decreased amount is represented by $\alpha$, the lithium ion-conducting oxide can be represented by the following formula (2).

$$Li_{1+\alpha}Ta_2P_{1-y}M2_yO_8 \cdots \qquad \text{Formula (2)}$$

(Content rate of monoclinic crystal)

The content rate of the monoclinic crystal to be confirmed in the X-ray diffraction measurement of the lithium ion-conducting oxide is preferably 60% or more. The content rate of the monoclinic crystal can be determined by the method using the Rietveld analysis to be described later in an example. The total content rate of the monoclinic crystals is more preferably 80% or more, and further preferably 90% or more. When a content rate of the monoclinic crystal is in the range described above, the lithium ion conductivity in total tends to be higher.

(Other crystal structures)

When the lithium ion-conducting oxide is insufficiently sintered in the production method to be described later and thus raw materials remain, diffraction peaks derived from raw materials can be confirmed in the X-ray diffraction measurement. The presence of a lithium carbonate ($Li_2CO_3$), a tantalum pentoxide ($Ta_2O_5$), an oxide of the element M2, and a diammonium hydrogen phosphate ($(NH_4)_2HPO_4$) to be used as raw materials can be confirmed by the X-ray diffraction measurement. These raw material compounds do not have the lithium ion conductivity and thus are preferably not included. Additionally, in the case of insufficient sintering, the presence of by-products can be confirmed in the X-ray diffraction measurement as diffraction peaks derived from the by-products. For example, lithium tantalate ($LiTaO_3$), $Li_3PO_4$, TaPOs, $Ta_2O_5$, and a composite oxide of the element M2 and lithium, tantalum, and/or silicon can be observed; however, it is preferable that these by-products are not included because they have low lithium ion conductivity.

(Lithium ion conductivity in total)

The lithium ion conductivity in total of the lithium ion-conducting oxide is the total ion conductivity of the lithium ion conductivities inside the crystal grains and the grain boundaries and can be determined by, for example, the impedance measurement of an ion conductivity evaluation described in an example to be described later. The lithium ion-conducting oxide preferably has a lithium ion conductivity in total $\delta_{total}$ (25°C) measured at 25°C of $1.50 \times 10^{-4}$ (S/cm) or more. It is more preferably $1.55 \times 10^{-4}$ (S/cm), further preferably $2.00 \times 10^{-4}$ (S/cm), and further preferably $2.50 \times 10^{-4}$ (S/cm). The lithium ion-conducting oxide in a preferable embodiment of the present invention described above is not particularly limited in the purpose of use but can be particularly preferably used as a solid electrolyte for a lithium-ion secondary battery.

(Lithium ion conductivity at the grain boundaries)

The lithium ion conductivity at the grain boundaries of the lithium ion-conducting oxide can be determined by, for example, the impedance measurement as in the lithium ion conductivity in total described above. The lithium ion-conducting oxide preferably has a lithium ion conductivity $\delta_{gb}$ (25°C) at the grain boundaries measured at 25°C of $3.00 \times 10^{-4}$ (S/cm) or more. It is more preferably $3.50 \times 10^{-4}$ (S/cm), further preferably $4.00 \times 10^{-4}$ (S/cm). The lithium ion-conducting oxide in a preferable embodiment of the present invention described above is not particularly limited in the purpose of use but can be particularly preferably used as a solid electrolyte for a lithium-ion secondary battery.

(Median diameter of crystal grains)

The median diameter of crystal grains included in the lithium ion-conducting oxide is, in terms of the arithmetical mean of crystal grain diameters, preferably 6.0 $\mu$m or less, more preferably 3.0 $\mu$m or less, and further preferably 1.5 $\mu$m or less. The median diameter of crystal grains included in the lithium ion-conducting oxide is determined by obtaining a transmitted image of the lithium ion-conducting oxide pellets prepared by the method to be described later using a transmission electron microscope (TEM) at a magnification of x1000 or more and measuring grain diameters of at least 100 crystal grains in any area with 100-$\mu$m square. Crystal grains are not in complete spherical shape and hence the longest diameter is defined as the grain diameter of a crystal grain. In the present description, the longest diameter of a crystal grain means the length of the longest diagonal of a polygon forming an outline of the crystal grain determined as below.

In a transmitted image of the lithium ion-conducting oxide, the outline of a crystal grain is observed as a convex polygon on a plane field of view. Of the diagonals with a plurality of lengths in the convex polygon, the length of the longest diagonal is defined as the longest diameter of the crystal grain.

The crystal grain containing lithium, tantalum, phosphorus, the element M2, and oxygen as the constituent elements can also be distinguished from other crystal grains based on the difference in the elements contained in crystal grains using an energy dispersive X-ray spectroscopy (EDS) analyzer attached to TEM equipment.

(Method for producing the lithium ion-conducting oxide)

The method for producing the lithium ion-conducting oxide in a preferable embodiment of the present invention is not particularly limited as long as a lithium ion-conducting oxide within the above constituent ranges can be obtained.

Employable includes, for example, the solid-phase reaction and the liquid-phase reaction. Hereinafter, the production method using the solid-phase reaction will be described in detail.

An example of the production method by the solid-phase reaction is a production method at least having one mixing step and one sintering step.

In the mixing step, a compound containing lithium atom(s), a compound containing tantalum atom(s), a compound containing the element(s) M2, and a phosphate are mixed.

The compound containing lithium atom(s) is not particularly limited, and inorganic compounds are preferable due to easy handleability, and examples of the inorganic compound containing lithium atom(s) include lithium compounds such as lithium carbonate ($Li_2CO_3$) and lithium oxide ($Li_2O$). These lithium compounds can be used singly, or in combinations of two or more thereof. Lithium carbonate ($Li_2CO_3$) is preferably used due to easy decomposition and reaction.

The compound containing tantalum atom(s) are not particularly limited, and inorganic compounds are preferable due to easy handleability, and examples include tantalum compounds such as tantalum pentoxide ($Ta_2O_5$) and titanium nitrate ($Ta(NO_3)_5$). These tantalum compounds can be used singly, or in combinations of two or more thereof. Tantalum pentoxide ($Ta_2O_5$) is preferably used from a viewpoint of costs.

The compound containing the element(s) M2 is not particularly limited, and inorganic compounds are preferable due to easy handleability, and examples include a simple or oxides of the element M2. These substances can be used singly, or two or more can be used in combination. Oxides are preferably used from a viewpoint of easy handleability.

When the element M2 is Si, Ge, and Al, examples of the oxide include silicon oxide ($SiO_2$), germanium dioxide ($GeO_2$), and aluminum oxide ($Al_2O_3$), respectively.

The phosphate is not particularly limited, and examples include phosphates such as diammonium hydrogen phosphate ($(NH_4)_2HPO_4$) and ammonium dihydrogen phosphate ($NH_4H_2PO_4$) due to easy decomposition and reaction. These phosphates can be used singly, or in combinations of two or more thereof.

For the mixing method of the raw materials described above, a method that can be used is a roll tumbling mill, a ball mill, a small-diameter ball mill (bead mill), a medium stirring mill, an airflow grinding mill, a mortar, an automatic kneading mortar, a tank mill, or a jet mill. The ratio of the raw materials to be mixed is, simply speaking, a stoichiometric ratio so that the composition of the formula (1) described above is achieved. More specifically, lithium atoms are likely to efflux from the system in the sintering step to be described later, and thus the compound containing lithium atom(s) described above can be adjusted by adding about 10 to 20% excess.

The mixing can be carried out under the atmosphere. A gas atmosphere of a nitrogen gas and/or an argon gas with an adjusted oxygen gas content is more preferable.

In the sintering step, the mixture obtained in the mixing step is sintered. When the sintering step is carried out several times such as a 2-phase step of low-temperature sintering and high-temperature sintering, a pulverizing step using, for example, a ball mill or a mortar can be provided between the sintering steps for the purpose of pulverizing or downsizing diameter of the primary sintered product.

The sintering step can be carried out under the atmosphere. A gas atmosphere of a nitrogen gas and/or an argon gas with an adjusted oxygen gas content is more preferable.

The sintering temperature is preferably in a range from 800 to 1200°C, more preferably in a range from 950 to 1100°C, and further preferably 950 to 1000°C. When the sintering is carried out at 800°C or more, the element M2 is sufficiently solid-soluted and the ion conductivity is enhanced, whereas when the temperature is 1200°C or less, lithium atoms are less likely to efflux from the system, hence preferable. The sintering time is preferably 1 to 16 hours, and preferably 3 to 12 hours. When the sintering time is in the range described above, the ion conductivity is likely to be higher and well-balanced in both inside the crystal grains and at the grain boundaries, hence preferable. When the sintering time is longer than the ranges described above, lithium atoms are likely to efflux from the system. The sintering time and temperature are adjusted in coordination with each other.

When the sintering step is, for example, a 2-phase step of low-temperature sintering and high-temperature sintering, a preliminary sintering at a low temperature can be carried out at 400 to 800°C for 2 to 12 hours.

High-temperature sintering can be carried out twice for preventing by-products from remaining. In the second sintering step, the sintering temperature is preferably in a range from 800 to 1200°C, more preferably in a range from 950 to 1100°C, and further preferably in a range from 950 to 1000°C. The sintering time at each sintering step is preferably 1 to 8 hours, and preferably 2 to 6 hours.

The sintered product obtained after the sintering, when left in the atmosphere, can change in quality by, for example, absorbing moisture or reacting to carbon dioxide. The sintered product obtained after the sintering is preferably moved and stored under demoistured inert gas atmosphere when a temperature drops lower than 200°C while decreasing the temperature after the sintering.

Thus, the lithium ion-conducting oxide of the invention by the present application can be obtained.

(Lithium-ion secondary battery)

Examples of one of the preferable embodiments of the lithium ion-conducting oxide include the utilization for a lithium secondary battery as the solid electrolyte. The structure of the lithium secondary battery is not particularly limited and, for example, in the case of a solid battery with a solid electrolyte layer, the battery has a structure in which a positive electrode collector, a positive electrode layer, a solid electrolyte layer, a negative electrode layer, and a negative electrode collector are laminated in this order.

The positive electrode collector and the negative electrode collector are not particularly limited as long as a material thereof conducts electrons without causing an electrochemical reaction. For example, these are constituted of a conductor such as a simple and an alloy of metals such as copper, aluminum, and iron or a conductive metal oxide such as an antimony-doped tin oxide (ATO), and a tin-doped indium oxide (ITO). Also usable is a collector in which a conductive adhesive layer is provided on the surface of a conductor. The conductive adhesive layer can be constituted by including, for example, a particulate conductive material and/or a fibrous conductive material.

The positive electrode layer and the negative electrode layer can be obtained by a known powder molding method. For example, a positive electrode collector, a powder for a positive electrode layer, a powder for a solid electrolyte layer, a powder for a negative electrode layer, and a negative electrode collector are superimposed in this order and powder-molded simultaneously, whereby the layer formation of the positive electrode layer, the solid electrolyte layer, and the negative electrode layer, respectively and the connection between the positive electrode collector, the positive electrode layer, the solid electrolyte layer, the negative electrode layer, and negative electrode collector respectively can be simultaneously achieved. Alternatively, each layer can also be powder-molded sequentially. The obtained powder-molded products can be heat-treated such as sintering as needed.

Examples of the powder-molding method include a method includes a method in which a solvent is added to a powder to form a slurry, the slurry is applied to a collector, dried, and then pressurized (doctor blade method), a method includes a method in which a slurry is put in a liquid-absorbing mold, dried, and then pressurized (casting method), a method includes a method in which a powder is put in a mold of a predetermined shape and compression-molded (metallic molding method), an extrusion method includes a method in which a slurry is extruded from a die and molded, a centrifugal force method includes a method in which a powder is compressed and molded by a centrifugal force, a roll molding method includes a method in which a powder is fed to a roller press machine and roll-molded, cold isostatic pressing includes a method in which a powder is put in a flexible bag of a predetermined shape and the bag is put in a pressure medium to which isotropic pressure is applied, and hot isostatic pressing includes a method in which a powder is put in a container of a predetermined shape, a vacuum state is created, and isotropic pressure is applied to the container at a high temperature by a pressure medium.

Examples of the metallic molding method include a single-action pressing method includes a method in which a powder is put in a fixed lower punch and a fixed die, and pressure is applied to the powder by a movable upper punch, a double-action pressing method includes a method in which a powder is put in a fixed die, and pressure is applied to the powder by a movable lower punch and a movable upper punch, a floating die method includes a method in which a powder is put in a fixed lower punch and a movable die, a pressure is applied to the powder by a movable upper punch, and when the pressure reaches higher than a predetermined value, the movable die is moved so that the fixed lower punch relatively enters inside the movable die, and a withdrawal method includes a method in which a powder is put in a fixed lower punch and a movable die, and pressure is applied to the powder by a movable upper punch while simultaneously the movable die is moved so that the fixed lower punch relatively enters inside the movable die.

The thickness of the positive electrode layer is preferably 10 to 200 $\mu$m, more preferably 30 to 150 $\mu$m, and further preferably 50 to 100 $\mu$m. The thickness of the solid electrolyte layer is preferably 50 nm to 1000 $\mu$m, and more preferably 100 nm to 100 $\mu$m. The thickness of the negative electrode layer is preferably 10 to 200 $\mu$m, more preferably 30 to 150 $\mu$m, and further preferably 50 to 100 $\mu$m.

(Active material)

Examples of the active material for the negative electrode include those containing at least one selected from the group consisting of lithium alloys, metal oxides, graphites, hard carbons, soft carbons, silicon, silicon alloys, silicon oxides $SiO_n$ ($0<n\leq2$), silicon/carbon composites, composites in which silicon is enclosed in pores of a porous carbon, lithium titanates, and graphites covered with a lithium titanate. The silicon/carbon composites and the composites in which a silicon domain is enclosed in pores of a porous carbon have a high specific capacity thereby to enhance an energy density and a battery capacity, hence preferable. More preferable is composites enclosing a silicon domain in pores of a porous carbon which have excellent volume expansion relaxation associated with the lithium occlusion/release of silicon and are capable of maintaining a good balance among the macro conductivity, the micro conductivity, and the ion conductivity in a composite electrode material or an electrode layer. Particularly preferable is composites in which a silicon domain is enclosed in pores of a porous carbon, wherein the silicon domain is amorphous, the size of the silicon domain is 10 nm or less, and pores derived from a porous carbon are present near the silicon domain.

Examples of the active material for the positive electrode include those containing at least one selected from the group consisting of LiCo oxides, LiNiCo oxides, LiNiCoMn oxides, LiNiMn oxides, LiMn oxides, LiMn spinels, LiMnAl oxides, LiMnMg oxides, LiMnCo oxides, LiMnFe oxides, LiMnZn oxides, LiCrNiMn oxides, LiCrMn oxides, lithium titanates, lithium metal phosphates, transition metal oxides, titanium sulfides, graphites, hard carbons, transition metal-containing lithium nitride, silicon oxides, lithium silicates, lithium metals, lithium alloys, Li-containing solid solutions, and lithium storable intermetallic compounds. LiNiCoMn oxides, LiNiCo oxides, or LiCo oxides are preferable, and LiNiCoMn oxides are more preferable. This is because this active material has good affinity to a solid electrolyte and a good balance among the macro conductivity, the micro conductivity, and the ion conductivity. Additionally, these active materials have a high average potential thereby to enhance an energy density and a battery capacity in the balance between the specific capacity and the stability. The active materials for the positive electrode can also have the surface covered with, for example, a lithium niobate, a lithium phosphate, or a lithium borate, which is an ion-conductive oxide.

The active material in an embodiment of the present invention is preferably a particulate. The 50% diameter in the volume-based particle size distribution thereof is preferably 0.1 $\mu$m or more and 30 $\mu$m or less, more preferably 0.3 $\mu$m or more and 20 $\mu$m or less, further preferably 0.4 $\mu$m or more and 10 $\mu$m or less, and most preferably 0.5 $\mu$m or more and 3 $\mu$m or less. Additionally, a ratio of a length of the major axis to a length of the minor axis (length of major axis/length of minor axis), that is, the aspect ratio, is preferably less than 3, and more preferably less than 2.

The active material in an embodiment of the present invention may form secondary particles. In such an instance, the 50% diameter in the number-based particle size distribution of the primary particles is preferably 0.1 $\mu$m or more and 20 $\mu$m or less, more preferably 0.3 $\mu$m or more and 15 $\mu$m or less, further preferably 0.4 $\mu$m or more and 10 $\mu$m or less, and most preferably 0.5 $\mu$m or more and 2 $\mu$m or less. When an electrode layer is formed by compression molding, the active material is preferably the primary particle. When the active material is the primary particle, the electron conduction path or the hole conduction path is less likely to be impaired even when compression-molded.

Example

Hereinafter, the present invention will be specifically described with reference to the Examples. It should be understood that the present invention is not limited only to the Examples. The powder X-ray diffraction measurement and the ion conductivity evaluation in the Examples and Comparative Examples were carried out by the following methods and procedures.

Example 1:

(1) Preparation of a lithium ion-conducting oxide

First, of a lithium carbonate ($Li_2CO_3$) (manufactured by Sigma-Aldrich Co. LLC, purity 99.0% or more), a tantalum pentoxide ($Ta_2O_5$) (manufactured by FUJIFILM Wako Pure Chemical Corporation, purity 99.9%), silicon oxide ($SiO_2$) (manufactured by FUJIFILM Wako Pure Chemical Corporation, purity 99.9%), and a diammonium hydrogen phosphate (($NH_4)_2HPO_4$) (manufactured by Sigma-Aldrich Co. LLC, purity 98% or more), the diammonium hydrogen phosphate and the silicon oxide were weighed so that the number of atoms of silicon in the percentage relative to the total number of atoms of the phosphorus and silicon elements was 3.0%, the tantalum pentoxide was weighed so that the number of atoms of tantalum relative to the total number of atoms of the phosphorus and silicon elements was 2 times the amount, and the lithium carbonate was weighed so that the number of atoms of lithium relative to the number of atoms of tantalum was 1.1/2 times the amount.

Each of the weighed powders was mixed for 3 hours using a zirconia ball mill (zirconia ball: diameter 1 mm) with the addition of a suitable amount of toluene.

The obtained mixture was put in an alumina boat and sintered for 4 hours at 1000°C while the temperature was increased to 1000°C at a rate of temperature increase of 10°C/min under an air (gas flow rate 100 mL/min) atmosphere using a rotary sintering furnace (manufactured by Motoyama).

A suitable amount of toluene was added to the primary sintered product obtained by sintering and pulverized for 3 hours using a zirconia ball mill (zirconia ball: diameter 1 mm) .

The obtained pulverized product was put in an alumina boat and sintered for 4 hours at 1000°C while the temperature was increased to 1000°C at a rate of temperature increase of 10°C/min under an air (gas flow rate 100 mL/min) atmosphere using a rotary sintering furnace (manufactured by Motoyama).

After the temperature was decreased, the obtained secondary sintered product was taken out at room temperature, moved to under a demoistured nitrogen atmosphere, thereby to obtain a lithium ion-conducting oxide (1).

(2) Powder X-ray diffraction (XRD) measurement

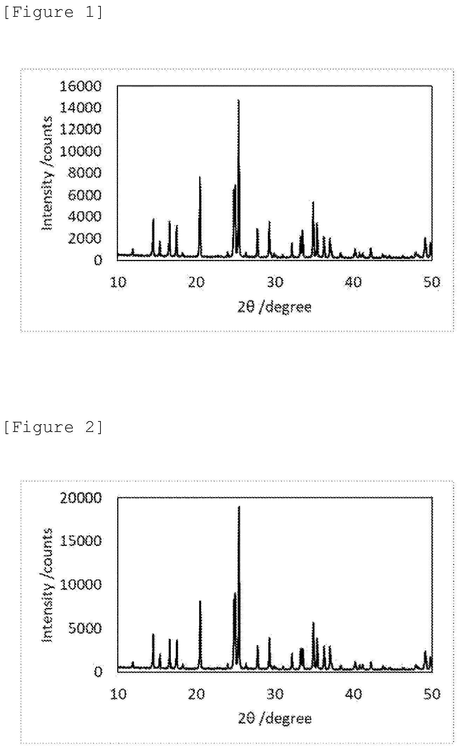

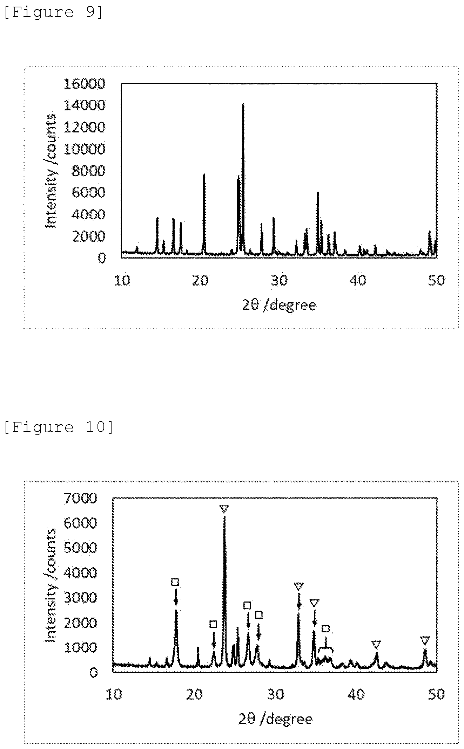

The powder X-ray diffraction measurement of the lithium ion-conducting oxide (1) was carried out using a powder X-ray diffractometer PANalytical MPD (manufactured by Spectris Co., Ltd.). The measurement was carried out under the X-ray diffraction measurement conditions of using Cu-K$\alpha$ ray (output 45 kV, 40 mA) in a range of a diffraction angle 2$\theta$ = 10 to 50°, thereby to obtain an X-ray diffraction (XRD) pattern of the lithium ion-conducting oxide (1). The obtained XRD pattern is shown in Figure 1. The XRD pattern only confirmed the monoclinic crystal structure substantially the same as undoped $LiTa_2PO_8$ shown Figure 9 in Comparative Example 1 to be described later.

The obtained XRD pattern was subjected to the Rietveld analysis using a known analysis software RIETAN-FP (obtainable from the creator; website of Fujio Izumi "RIETAN-FP·VENUS system distribution file" (http://fujioizumi.verse.jp/download/download.html)) thereby to calculate the lattice constants a, b, and c and the $\beta$ angle, which were found 9.7182 Å, 11.5321 Å, and 10.6956 Å, and 90.033°, respectively. The Rietveld analysis using RIETAN-FP can calculate a crystal amount of the confirmed crystals. Using the following formula (3), a content rate of the monoclinic crystal was calculated.

$$\text{(Monoclinic crystal content rate) (\%) = (crystal amount of}$$

$$\text{monoclinic crystals)}/\{\text{(crystal amount of monoclinic crystals)}$$

$$\text{+ (total crystal amount of crystals other than monoclinic}$$

$$\text{crystals)} \times 100 \qquad \cdots \text{Formula (3)}$$

The crystals other than monoclinic crystals here include the crystals of monoclinic crystal system that are not derived from $LiTa_2PO_8$.

In Figure 1, only the diffraction pattern of monoclinic crystal substantially the same as $LiTa_2PO_8$ was observed, and the monoclinic crystal content rate of the lithium ion-conducting oxide (1) was 100%.

(3) Ion conductivity evaluation

(Preparation of measurement pellets)

Measurement pellets for the ion conductivity evaluation of the lithium ion-conducting oxide were prepared as follows. The obtained lithium ion-conducting oxide (1) was molded into a disc shape having a diameter of 10 mm and a thickness of 1 mm using a tablet molding machine and sintered at 1100°C for 3 hours under the atmosphere. The obtained sintered product had a relative density to the theoretical density of 93%. Gold layers were formed using a sputtering machine on both faces of the obtained sintered product thereby to obtain measurement pellets for the ion conductivity evaluation.

(Impedance measurement)

The ion conductivity evaluation of the ion-conducting oxide (1) was carried out as follows. The measurement pellets prepared by the method described above were retained at 25°C for 2 hours before the measurement. Then, AC impedance measurement was carried out at 25°C using an impedance analyzer (manufactured by Solartron Analytical, Model No: 1260A) in a frequency range of 1 Hz to 10 MHz at an amplitude of 25 mV. The obtained impedance spectra were fit to equivalent circuits using an equivalent circuit analysis software ZView attached to the equipment thereby to obtain ion conductivities inside the crystal grains and at the grain boundaries, and lithium ion conductivity in total respectively. The determined ion conductivities are each collectively shown in Table 1.

Examples 2 to 8:

(Preparation of lithium ion-conducting oxides)

Lithium ion-conducting oxides (2) to (8) were obtained respectively in the same manner as Example 1 with the exception that the amounts of the silicon oxide and the diammonium hydrogen phosphate mixed were changed so that an amount of silicon to be doped to $LiTa_2PO_8$ was the doped amounts shown in Table 1.

(XRD Measurement, ion conductivity evaluation)

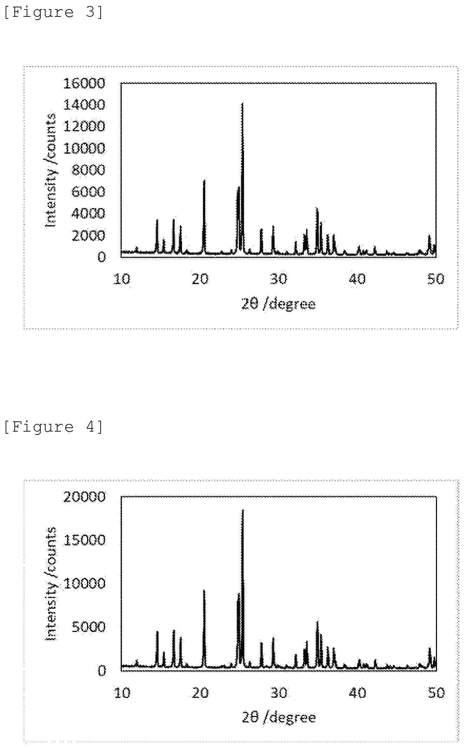

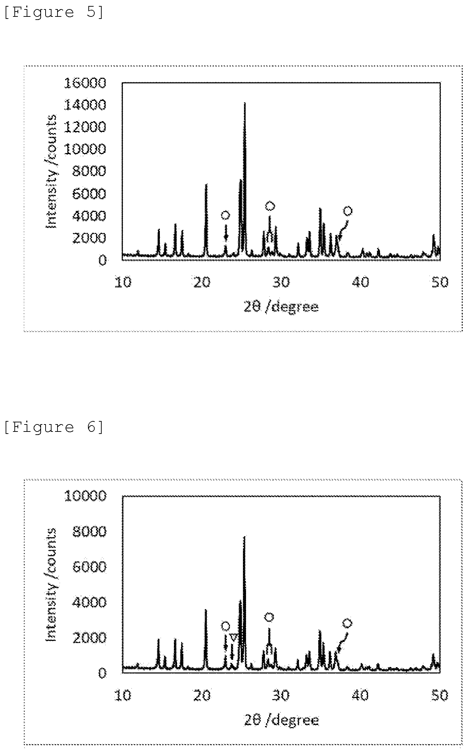

The XRD measurement and the ion conductivity evaluation were respectively measured and analyzed in the same manner as Example 1. The XRD patterns of the lithium ion-conducting oxides (2) to (8) are shown in Figure 2 to Figure 8, respectively. In the XRD patterns of Figure 2 to Figure 4, only the same peaks as Figure 1 were observed, thereby confirming only the crystal structure of monoclinic crystals. In Figure 5, the same peaks as Figure 1 were confirmed, and the diffraction peaks derived from the tantalum pentoxide ($Ta_2O_5$) were confirmed at the places shown in circle marks.

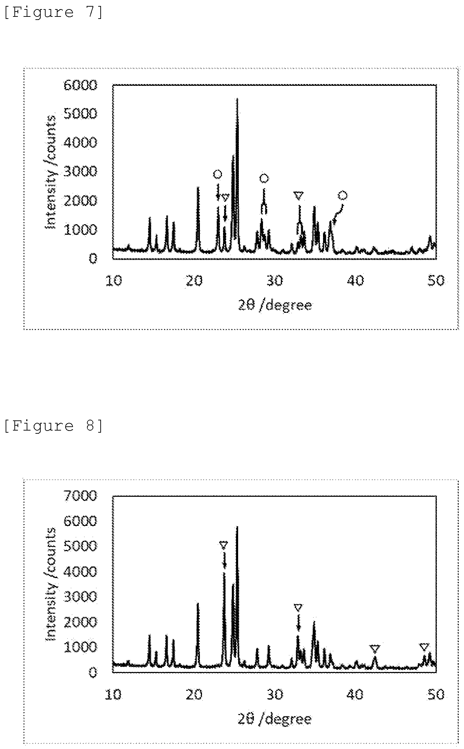

In Figure 6 and Figure 7, the same peaks as Figure 1 were confirmed, and the diffraction peaks derived from crystals of the tantalum pentoxide ($Ta_2O_5$) were confirmed at the places shown in circle marks, and the diffraction peaks derived from crystals of the lithium tantalate ($LiTaO_3$) were confirmed at the places shown in inverted triangle marks, respectively.

In Figure 8, the same peaks as Figure 1 were confirmed, and the diffraction peaks derived from crystals of the lithium tantalate ($LiTaO_3$) were confirmed at the places shown in inverted triangle marks.

The monoclinic crystal content rates, the ion conductivities inside the crystal grains and at the grain boundaries, and the lithium ion conductivities in total of the lithium ion-conducting oxides (2) to (8), respectively are shown in Table 1.

Comparative Example 1:

(Preparation of a lithium ion-conducting oxide)

A lithium ion-conducting oxide (c1) was obtained in the same manner as Example 1 with the exception that silicon was not doped to $LiTa_2PO_8$, that is, the amount of the diammonium hydrogen phosphate mixed was changed.

(XRD Measurement, ion conductivity evaluation)

The XRD measurement and the ion conductivity evaluation were measured and analyzed in the same manner as Example 1. The XRD pattern of the lithium ion-conducting oxide (c1) is shown in Figure 9. In the XRD pattern of Figure 9, only the crystal structure of monoclinic crystal identified by $LiTa_2PO_8$ was confirmed.

The monoclinic crystal content rate, the ion conductivities inside the crystal grains and at the grain boundaries, and the lithium ion conductivity in total of the lithium ion-conducting oxide (c1), respectively are shown in Table 1.

Comparative Example 2:

(Preparation of a lithium ion-conducting oxide)

A lithium ion-conducting oxide (c2) was obtained in the same manner as Example 1 with the exception that the amounts of the diammonium hydrogen phosphate and the silicon oxide mixed were changed so that the percentage of the number of atoms of silicon relative to the total number of atoms of the phosphorus and silicon elements was 70% (y = 0.70) to $LiTa_2PO_8$.

(XRD Measurement, ion conductivity evaluation)

The XRD measurement and the ion conductivity evaluation were respectively measured and analyzed in the same manner as Example 1. The obtained XRD pattern is shown in Figure 10. In Figure 10, the same peaks as Figure 1 were confirmed, and the diffraction peaks derived from crystals of the lithium tantalate ($LiTaO_3$) were confirmed at the places shown in inverted triangle marks, and the diffraction peaks derived from crystals of LiTaSiOs were confirmed at the places shown in square marks, respectively.

The monoclinic crystal content rate, the ion conductivities inside the crystal grains and at the grain boundaries, and the lithium ion conductivity in total of the lithium ion-conducting oxide (c2) are shown in Table 1.

(Median diameter of crystal grains)

The median diameter of crystal grains of the lithium ion-conducting oxide (4) prepared in Example 4 was determined by the following procedure.

(Preparation of a sample for median diameter measurement)

For the sample for median diameter measurement, the pellet prepared was obtained using the lithium ion-conducting oxide (4) by the method for preparing measurement pellets described above was processed using a focused ion beam (FIB) machining equipment to obtain a sample for median diameter measurement.

(TEM Image and calculation of a median diameter)

A transmitted image of the sample for median diameter measurement prepared using the TEM equipment.

Measurement equipment and so on;

TEM Equipment: ARM200F (manufactured by JEOL Ltd.)

Acceleration voltage 200 kV

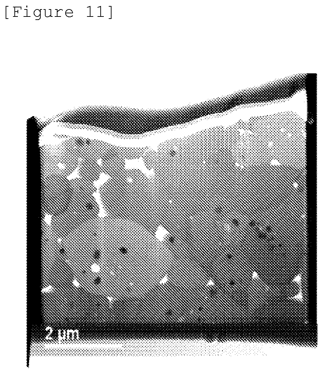

Figure 11 shows an example of the transmitted image. The median diameter of the crystal grains of the lithium ion-conducting oxide (4) determined by the method described above was 1.3 $\mu$m.

[Table 1]

| | Si-doped amount | | Monoclinic crystal content rate (%) | Lithium ion conductivity (S·cm$^{-1}$) | | |
| --- | --- | --- | --- | --- | --- | --- |
| | Si/(Si+P) $\times$ 100(%) | y | | Inside crystal grain | Crystal grain boundary | Total |
| Example 1 | 3 | 0.03 | 100 | $1.96 \times 10^{-3}$ | $9.37 \times 10^{-4}$ | $6.33 \times 10^{-4}$ |
| Example 2 | 10 | 0.10 | 100 | $1.54 \times 10^{-3}$ | $4.58 \times 10^{-4}$ | $3.53 \times 10^{-4}$ |
| Example 3 | 15 | 0.15 | 100 | $1.47 \times 10^{-3}$ | $2.59 \times 10^{-3}$ | $9.38 \times 10^{-4}$ |
| Example 4 | 20 | 0.20 | 100 | $9.92 \times 10^{-4}$ | $7.10 \times 10^{-4}$ | $4.14 \times 10^{-4}$ |
| Example 5 | 30 | 0.30 | 93 | $5.45 \times 10^{-4}$ | $1.15 \times 10^{-3}$ | $3.70 \times 10^{-4}$ |
| Example 6 | 40 | 0.40 | 89 | $3.52 \times 10^{-4}$ | $8.60 \times 10^{-4}$ | $2.50 \times 10^{-4}$ |
| Example 7 | 50 | 0.50 | 74 | $3.85 \times 10^{-4}$ | $8.88 \times 10^{-4}$ | $2.68 \times 10^{-4}$ |
| Example 8 | 60 | 0.60 | 61 | $2.15 \times 10^{-4}$ | $6.07 \times 10^{-4}$ | $1.59 \times 10^{-4}$ |
| Comparative Example 1 | 0 | 0.00 | 100 | $2.05 \times 10^{-3}$ | $2.70 \times 10^{-5}$ | $2.67 \times 10^{-5}$ |
| Comparative Example 2 | 70 | 0.70 | 11 | $2.05 \times 10^{-5}$ | $3.29 \times 10^{-5}$ | $1.26 \times 10^{-5}$ |

According to the results of the Examples, a lithium ion-conducting oxide comprising at least lithium, tantalum, phosphorus, M2, and oxygen as constituent elements, wherein M2 is at least one element selected from the group consisting of elements of the Group 14 and Al (provided that carbon is excluded), a ratio of number of atoms of each constituent element of lithium, tantalum, phosphorus, M2, and oxygen is 1 : 2 : 1-y : y : 8, wherein y is more than 0 and less than 0.7, and containing a monoclinic crystal, has high lithium ion conductivity at the grain boundaries and high lithium ion conductivity in total.

Industrial Applicability

The lithium ion-conducting oxide in a preferable embodiment of the present invention has high lithium ion conductivity at the grain boundaries and high lithium ion conductivities in total, and thus can be preferably used as a solid electrolyte for a lithium-ion secondary battery.

**Claims**

1. A lithium ion-conducting oxide, comprising:

   at least lithium, tantalum, phosphorus, M2, and oxygen as constituent elements,
   wherein M2 is at least one element selected from the group consisting of elements of the Group 14 and Al (provided that carbon is excluded),
   a ratio of number of atoms of each constituent element of lithium, tantalum, phosphorus, M2, and oxygen is 1 : 2 : 1-y : y : 8,
   wherein y is more than 0 and less than 0.7, and
   the lithium ion-conducting oxide containing a monoclinic crystal.

2. The lithium ion-conducting oxide according to claim 1, wherein M2 is any one or more elements selected from the group consisting of Si, Ge, and Al.

3. The lithium ion-conducting oxide according to claim 1 or 2, wherein a total content rate of the monoclinic crystal is 60% or more.

4. The lithium ion-conducting oxide according to any one of claims 1 to 3, wherein a lithium ion conductivity in total $\delta_{total}$ (25°C) is $1.50 \times 10^{-4}$ (S/cm) or more.

5. A lithium-ion secondary battery comprising the lithium ion-conducting oxide according to any one of claims 1 to 4 as a solid electrolyte.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

| INTERNATIONAL SEARCH REPORT | International application No. |
|---|---|
| | PCT/JP2020/032156 |

**A. CLASSIFICATION OF SUBJECT MATTER**
C01B 25/37(2006.01)i; H01B 1/06(2006.01)i; H01B 1/08(2006.01)i; H01M
10/052(2010.01)i; H01M 10/0562(2010.01)i
FI: C01B25/37 M; H01M10/0562; H01M10/052; H01B1/06 A; H01B1/08
According to International Patent Classification (IPC) or to both national classification and IPC

**B. FIELDS SEARCHED**

Minimum documentation searched (classification system followed by classification symbols)
C01B25/37; H01B1/00-1/24; H01M10/05-10/0587

| Documentation searched other than minimum documentation to the extent that such documents are included in the fields searched | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JST7580/JSTChina (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| P, A | WO 2020/036290 A1 (AJOU UNIVERSITY INDUSTRY-ACADEMIC COOPERATION FOUNDATION) 20 February 2020 (2020-02-20) entire text, all drawings | 1-5 |
| A | KIM, J. et al., "LiTa2P08: a fast lithium-ion conductor with new framework structure", Journal of Materials Chemistry A, 29 October 2018, vol. 6, pp. 22478-22482, doi:10.1039/C8TA09170F entire text, all drawings | 1-5 |
| A | HUSSAIN, F. et al., "Theoretical Insights into Li-ion Transport in LiTa2P08", The Journal of Physical Chemistry C, 23 July 2019, vol. 123, pp. 19282-19287, doi:10.1021/acs.jpcc.9b03313 entire text, all drawings | 1-5 |
| A | WO 2018/181827 A1 (TDK CORPORATION) 04 October 2018 (2018-10-04) entire text, all drawings | 1-5 |

☒ Further documents are listed in the continuation of Box C.     ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 October 2020 (22.10.2020) | 10 November 2020 (10.11.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/032156 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2003/008097 A1 (JAPAN SCIENCE AND TECHNOLOGY CORP.) 30 January 2003 (2003-01-30) entire text, all drawings | 1-5 |

Form PCT/ISA/210 (continuation of second sheet) (January 2015)

INTERNATIONAL SEARCH REPORT

Information on patent family members

International application No.

PCT/JP2020/032156

| Patent Documents referred in the Report | Publication Date | Patent Family | Publication Date |
|---|---|---|---|
| WO 2020/036290 A1 | 20 Feb. 2020 | KR 10-2020-0020172 A | |
| WO 2018/181827 A1 | 04 Oct. 2018 | US 2020/0020978 A1 entire text, all drawings CN 110462913 A | |
| WO 2003/008097 A1 | 30 Jan. 2003 | US 2004/0204313 A1 entire text, all drawings EP 1413355 A1 JP 2003-024792 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016169145 A

**Non-patent literature cited in the description**

- **J. KIM et al.** *J. Mater. Chem. A,* 2018, vol. 6, 22478-22482